# EUROPÄISCHE PATENTSCHRIFT

(11) **EP 2 055 165 B1**
(45) Veröffentlichungstag und Bekanntmachung des Hinweises auf die Patenterteilung: **17.03.2010**
(21) Anmeldenummer: 08018690.1
(22) Anmeldetag: 24.10.2008
(51) Int. Cl.: A01C 7/08, A01C 7/20

(54) **Pneumatisch beaufschlagter Saatführungskanal eines Säschares**
Pneumatically pressurised seed guiding channel of a seed drill coulter
Canal de guidage de semences à fonctionnement pneumatique d'une semeuse

(30) Priorität: 30.10.2007 DE 102007051702
(43) Veröffentlichungstag der Anmeldung: 06.05.2009
(73) Patentinhaber: Amazonen-Werke H. Dreyer GmbH & Co. KG, 49205 Hasbergen (DE)
(72) Erfinder: Johannaber, Stefan Jan, 49536 Lienen (DE); Wiebusch, Thorsten, 49205 Hasbergen (DE); Götzen, Nils, 47506 Neukirchen-Vluyn (DE); Olderog-Enge, Arndt, 23769 Dänschendorf a/F (DE)

(56) Entgegenhaltungen:
- EP-A- 1 461 989
- CA-A1- 2 557 228
- US-B1- 6 367 396

## Beschreibung

Die Erfindung betrifft einen pneumatisch beaufschlagten Saatgutführungskanal eines Säschares gemäß des Oberbegriffes des Patentanspruches 1.

Ein derartiger Saatgutfuhrungskanal ist beispielsweise durch die EP 1 461 989 A1 oder durch die CA 2 557 228 A1 bekannt. Dieser Saatgutführungskanal ist im Querschnitt rechteckig ausgebildet und weist eine ebene in Förderrichtung gekrümmt verlaufende Krümmungsaußenwandung auf. Zwischen der Krümmungsaußenwand und den Seitenflächen des Saatgutführungskanals sind Luftauslassöffnungen angeordnet durch die die Förderluft, mit der der pneumatisch beaufschlagte Saatgutführungskanal beaufschlagt ist, vor Ablage des Saatgutes zumindest teilweise entweichen kann. Das Saatkorn kann so mit einem verringerten Luftdruckanteil und somit in beruhigter Weise in der Saatfurche abgelegt werden. Bei praktischen Versuchen hat sich heraus gestellt, dass die Anordnung der Luftauslassöffnung seitlich der Krümmungsaußenwand und die seitliche Ableitung der austretenden Luft Nachteile mit sich bringen. Weiterhin ist eine unruhige Förderung des Saatgutes entlang der Wandung der Krümmungsaußenseite festgestellt worden.

Der Erfindung liegt die Aufgabe zugrunde, unter Vermeidung der vorgeschilderten Nachteile den Saatgutzuführungskanal und die Anordnung des Schlitzes, durch den die Luft entweichen kann, entscheidend zu verbessern.

Diese Aufgabe wird erfindungsgemäß durch die kennzeichnenden Merkmale des Patentanspruches 1 gelöst. Infolge dieser Maßnahme ist der Schlitz, durch den die Luft entweichen kann, in der Mitte der Wandung der Krümmungsaußenseite als in Förderrichtung verlaufender Schlitze ausgestaltet. Weiterhin bildet der Schlitz eine Führungsbahn für die durch den Saatgutführungskanal geförderten und von der Luftströmung mitgerissenen Saatkörnern. Somit werden die Saatkörner entlang des Schlitzes von diesem Schlitz geführt. Eine besonders gute Führung des Saatgutes wird durch die V-förmig oder trichterförmig aufeinander zulaufenden Seitenflächen des Saatgutführungskanals in Richtung des Schlitzes erreicht. Dies lässt sich beispielsweise dadurch erreichen, dass der Saatgutführungskanal im Querschnitt kreisförmig oder oval ausgestaltet ist.

Um die Luft durch den Schlitz möglichst gleichmäßig ausströmen zu lassen, ist vorgesehen, dass der Saatgutführungskanal über den gesamten Krümmungsbereich einen durchgehenden Schlitz, der die nutähnliche Saatgutführungsbahn und die Luftauslassöffnung bildet, sich erstreckt, dass an den Saatgutführungskanal eine pneumatische Saatgutzuführungsleitung angeschlossen ist.

Eine einfache Ausgestaltung und Herstellung des Saatgutführungskanals lässt sich dadurch erreichen, dass der Saatgutführungskanal aus Kunststoff besteht und aus zwei halbschalenähnlichen Rohrteilen mit einer in Fahrtrichtung der Sämaschine verlaufenden Teilungsebenen gefertigt ist und beide halbschalenförmigen Rohrteile mittels Verbindungselementen zusammengefügt sind.

Hierbei lässt sich die Anordnung des Schlitzes in einfacher Weise dadurch erreichen, dass der Schlitz sich zwischen den halbschattenähnlichen Rohrteil befindet.

Um gleichzeitig mit dem Saatgut andere Saatgutbehandlungsmittel oder -materialien ausbringen zu können, die auch in kristalliner oder fein gekörnter Form vorliegen, ist vorgesehen, dass in einem geringen Abstand vor der Ausmündung in den Saatgutführungskanal eine Materialzuführungsleitung unter einem flachen Winkel einmündet.

Die gleichzeitige Ausbringung z.B. von sehr leicht gewichtigen und feinen gekörnten oder kristallinen Mikrogranulaten bei einem pneumatisch beaufschlagten Saatgutzuführungskanal mit ausbringen zu können, ist die erfindungsgemäße Ausgestaltung des Saatgutführungskanals entscheidend, wobei bereits vor Ende des Saatgutzuführungskanals und der Einmündung des Materialzuführungskanals die Luft des Förderluftstromes zumindest teilweise entweichen kann.

Um sich an unterschiedlichen Ausbringbedingungen und Saatgütern in einfacher Weise anpassen zu können, ist vorgesehen, dass der Schlitz in seiner Breite einstellbar ausgebildet ist.

Diese Einstellung kann beispielsweise dadurch erfolgen, dass die halbschalenähnlichen Rohrteile zur Einstellung der Breite des Schlitzes zueinander mittels geeigneter Mittel verstellbar sind.

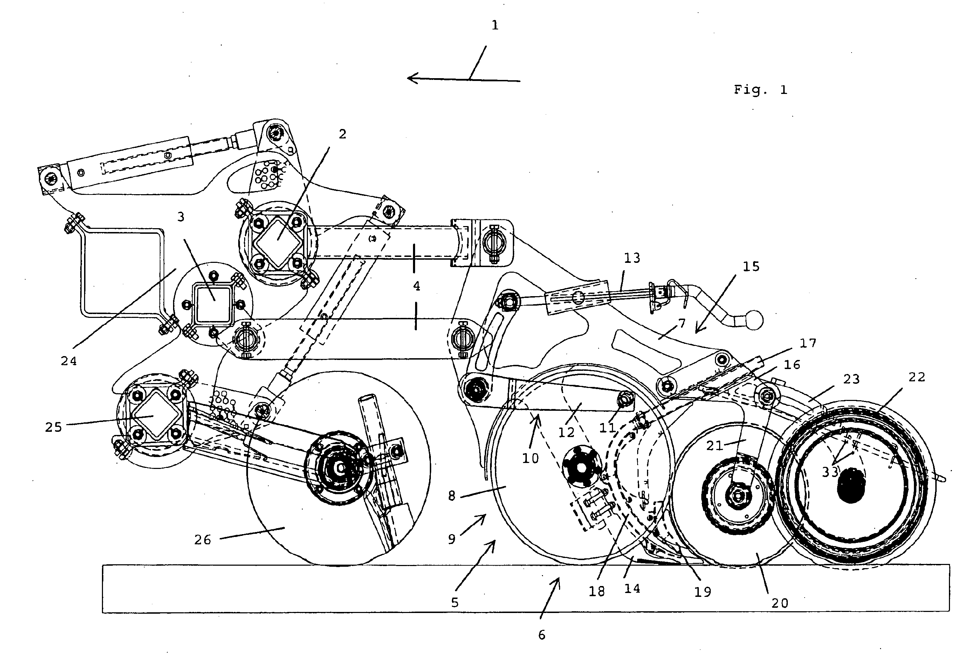

Weitere Einzelheiten der Erfindung sind den übrigen Unteransprüchen, der Beispielsbeschreibung und den Zeichnungen zu entnehmen. Hierbei zeigen
- Fig. 1: das Säschar einer Einzelkornsämaschine in Arbeitsstellung und in Seitenansicht,

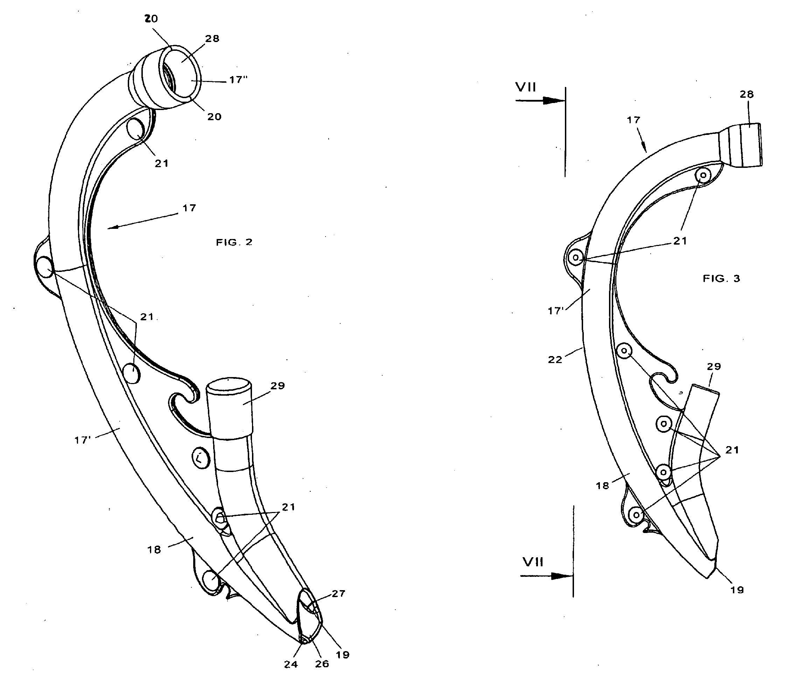

- Fig. 2: die Saatgutzuführungsleitung mit Schusskanal in perspektivischer Darstellung,
- Fig. 3: die Saatgutzuführungsleitung mit Schusskanal in Seitenansicht,

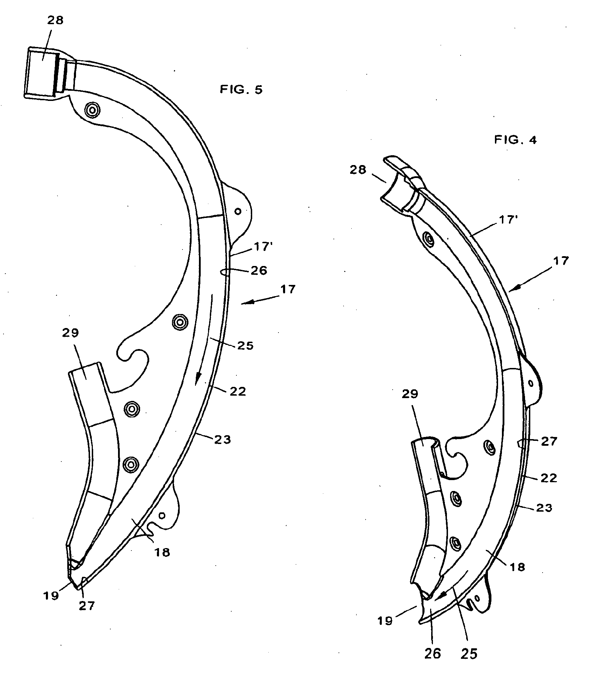

- Fig. 4: die in Fahrtrichtung gesehen linke Halbschale der Saatgutzuführungsleitung mit Schlusskanal in perspektivischer Darstellung,
- Fig. 5: die in Fahrtrichtung gesehen linke Halbschale der Saatgutzuführungsleitung mit Schlusskanal in Seitenansicht,

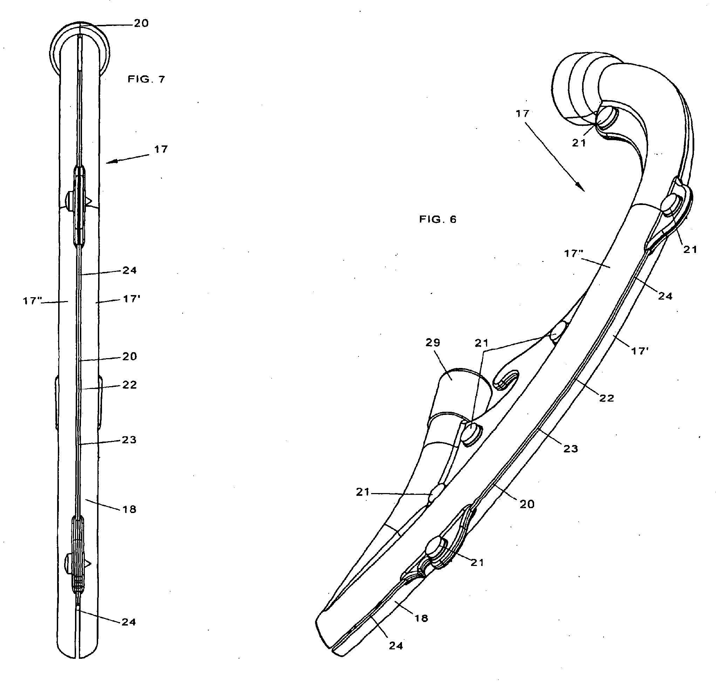

- Fig. 6: den Saatgutzuführungskanal mit Schusskanal in perspektivischer Darstellung und
- Fig. 7: den Saatgutzuführungskanal mit Schusskanal in der Ansicht VII - VII.

An den sich quer zur Fahrtrichtung 1 erstreckenden Tragbalken 2 und 3 sind mittels Parallelogrammlenker 4 mehrere Säschare 5 beabstandet zueinander angeordnet. Diese Säschare 5 sind Bestandteil einer pneumatischen Einzelkornsämaschine denen das sich im Vorratsbehälter der Sämaschine befindliche Saatgut über eine Vereinzelungsvorrichtung über pneumatisch beaufschlagte Saatleitungen zugeführt wird. Die Säschare 5 legen die Saatkörner des Saatgutes beabstandet und gleichmäßig in den von den Furchenöffnungselementen 6 der Säschare 5 gezogenen Furchen ab.

Jedes Säschar 5 weist einen Scharhalter 7 auf, der über die beiden Parallelogrammlenker 4 an den quer zur Fahrtrichtung 1 verlaufenden Trägern 2, 3 der Querbalkenanordnung in aufrechter Ebene bewegbar angeordnet sind. An dem Scharhalter 7 sind mittels Drehlagerungen die Scharscheiben 8 eines Doppelscheibenschares 9 frei drehbar angeordnet. Über die dargestellte Halterung 10 ist jeweils seitlich neben den Scheiben 8 des Doppelscheibensäschares 10 ein nicht dargestelltes Tiefenführungsrad frei drehbar auf der Welle 11 des einstellbaren Winkelschwenkarmes 12 angeordnet. Über diesen Winkelschwenkarm 12 ist mittels der als Einstellspindel 13 ausgebildeten Einstellvorrichtung die Lage des an der Lagerung der Welle 11 befestigten Tiefenführungsrades zu der Scharscheibe 8 und somit die Eindringtiefe der Scharscheiben 8 des Doppelscheibenschares 9 im Boden einzustellen. An der Scharhalterung 7 ist zwischen den beiden Scharscheiben 8 des Doppelscheibenschares 9 der Furchenformer 14 angeordnet. Die Scharscheiben 8 des Doppelscheibenschares 9 und der Furchenformer 14 bilden das Furchenöffnungselement 6.

An dem hinteren Bereich 15 der Scharhalterung 7 ist mittels des Halteelementes 16 die Saatgutzuführungsleitung 17, die im unteren Bereich als nach hinten weisender Schusskanal 18 ausgebildet ist und an seinem hinteren Ende die Auslassöffnung 19 für die in der Säfurche abzulegenden Saatgutkörner aufweist. Hinter der Saatgutzuführungsleitung 17 und dem Schusskanal 18 ist beanstandet vor der Auslassöffnung 19 der Saatgutzuführungsleitung 17 bzw. des Schusskanals 18 die frei drehbar angeordnete Saatgutfangrolle 20 über einen Haltearm 21 angeordnet. Hinter der Saatgutfangrolle 20 sind zwei V-förmig zueinander angestellte Saatandruckrollen 22 über den Schwenkarm 23 an dem Halteelement 16 befestigt.

An dem oberen Ende der an dem Halteelementen 16 angeschlossenen Saatgutzuführungsleitung 17 wird in nicht dargestellter Weise die von dem nicht dargestellten Vereinzelungsorgan der Sämaschine zu den Saatgutzuführungsleitungen 17 führende, pneumatisch beaufschlagte Saatleitung angeschlossen.

Die Saatgutzuführungsleitung 17 mit dem Schlusskanal 18 bestehen aus zwei halbschalenähnlichen Rohrteilen 17', 17" mit einer in Fahrtrichtung 1 der Sämaschine verlaufenden Teilungsebene 20. Die beiden halbschalenförmigen Rohrteile 17' und 17" sind mittels als Schrauben 21 ausgebildeten Verbindungselementen zusammengefügt. Es ist jedoch auch möglich, die halbschalenförmigen Rohrteile mittels anderer Verbindungselementen bzw. Clipsverbindungen etc. zusammenzufügen. Der Querschnitt des Saatgutzuführungskanals 17 und des Schusskanals 18 ist im Ausführungsbeispiel rund ausgebildet. Es ist jedoch auch möglich, ihn oval auszubilden. Der Saatgutführungskanal 17 weist im Bereich des Säschares 5 auf einer Krümmungsäußenseite 22 in der Krümmungsaußenwand 23 einen sich in radialer und/oder umlaufender Richtung erstreckenden durchgehenden Schlitz 24 in der Krümmungsaußenwandung 23 auf. Dieser Schlitz 24 erstreckt sich von der Ausmündung 19 entgegen der Förderrichtung 25 über zumindest die halbe Länge der Krümmung des Saatgutzuführungskanals 17. Insbesondere befindet er sich im letzten Bereich des Saatgutführungskanals 17, der als Schusskanal 18 ausgebildet ist, um das Saatgut in Richtung der Saatfurche in dem von der Saatfurche und der Saatgutfangrolle 20 zu schießen bzw. zu schleudern. Der Schlitz 24 in der Wandung 23 der Krümmungsaußenseite 22 des Saatgutführungskanals 17 ist als Luftauslassöffnung ausgebildet, damit zumindest ein Teil der Förderluft durch den Schlitz 24 entweichen kann. Der Schlitz 24 bildet auf der Innenseite 26 der Krümmungsaußenwandung 23 des Saatgutführungskanals 17 eine nutähnliche Saatgutführungsbahn für das auszubringende Saatkorn. Die inneren Seitenflächen 27 des Saatgutführungskanals 17 sind in Richtung des Schlitzes 24 auf der Krümmungsaußenseite 22 V-förmig bzw. trichterförmig aufeinander zulaufend angeordnet.

Wie erwähnt, weist der Saatgutführungskanal 17 somit über den zumindest gesamten Krümmungsbereich einen durchgehenden Schlitz 24, der die nutähnliche Saatgutführungsbahn und die Luftauslassöffnung bildet, auf. Das obere Ende 28 des Saatgutzuführungskanals 17 ist in nicht dargestellter Weise an eine pneumatische Saatgutzuführungsleitung, die mit der Vereinzelungsvorrichtung verbunden ist, angeschlossen.

Der Schlitz 24 ist mittig in der Krümmungsaußenwandung 23 angeordnet. Der Schlitz 24 kann mittels nicht dargestellter Einstellelemente in seiner Breite einstellbar sein, so dass die entweichende Luftmenge an das auszubringende Saatgut in optimaler Weise angepasst werden kann. Hierbei sind dann die halbschalenähnlichen Rohrteile 17' und 17" zur Einstellung der Breite des Schlitzes 24 zueinander mittels geeigneter Mittel ein- und/oder verstellbar zueinander.

In einem geringen Abstand vor der Ausmündung 11 des Saatgutführungskanals 17 mündet im Bereich des Schusskanals 18 in den Saatgutführungskanal eine Materialzuführungsleitung 29 unter einem flachen Winkel ein. Über diese zusätzliche Materialzuführungsleitung 29, die mit einer nicht dargestellten Materialzuführung und einer Dosiereinrichtung verbunden ist, kann beispielsweise Mikrogranulat gleichzeitig mit der Saatgutausbringung in die Säfurche eingegeben und mit ausgebracht werden. Der Winkel, unter den die Materialzuführungsleitunge 29 in den Saatgutzuführungskanal 17 einmündet, ist kleiner als 20°.

Aufgrund der Tatsache, dass über den Schlitz 24 in der Krümmungaußenwandung 23 bereits Luft entweichen kann, kann auch das nur ein geringes spezifische Gewischt aufweisende Mikrogranulat gezielt in der Säfurche abgelegt werden, ohne dass es aus der Säfurche herausgeblasen wird.

## Patentansprüche

1. Pneumatisch beaufschlagter Saatgutführungskanal (17) eines Säschares (5) einer Sämaschine, insbesondere Einzelkornsämaschine, der im Bereich des Säscharen (5) eine entgegen der Fahrtrichtung (1) ausgerichtete Krümmung aufweist und eine entgegen der Fahrtrichtung (1) aufweisende Ausmündungsöffnung (19) besitzt, wobei der Saatgutführungskanal (17) im Bereich des Säschares (5) auf seiner Krümmungsaußenseite (22) zumindest eine Luftausläuföffnung in seiner Wandung (23) aufweist, **dadurch gekennzeichnet, dass** die auf der Krümmungsaußenseite (22) in der Wandung (23) sich befindliche Luftauslassöffnung im Bereich des Säschars (5) als sich in radialer und/oder umlaufender Richtung erstreckender durchgehender Schlitz (24) in der Krümmungsaußenwandung (23) ausgebildet ist und sich von der Ausmündung (19) entgegen der Förderrichtung (25) über zumindest die halbe Länge der Krümmung des Saatgutführungskanals (17) erstreckt und eine nutähnliche Saatgutführungsbahn auf der Innenseite (26) der Krümmungsaußenwandung (23) des Saatgutführungskanals (17) bildet, dass die inneren Seitenflächen (27) des Saatgutführungskanals 17 in Richtung des Schlitzes (24) auf der Krümmungsaußenseite (22) V-förmig und/oder trichterförmig aufeinander zulaufend angeordnet sind.

2. Saatgutführungskanal nach Anspruch 1, **dadurch gekennzeichnet, dass** der Saatgutführungskanal (17) über den zumindest annähernd gesamten Krümmungsbereich einen durchgehenden Schlitz (24), der die nutähnliche Saatgutführungsbahn und die Luftauslassöffnung bildet, aufweist, dass an den Saatgutführungskanal (17) eine pneumatische Saatgutzuführungsleitung angeschlossen ist.

3. Saatgutführungskanal nach einem oder mehreren der vorstehenden Ansprüche, **dadurch gekennzeichnet, dass** der Saatgutführungskanal (17) aus Kunststoff besteht und aus zwei halbschalenähnlichen Rohrteilen (17',17") mit einer in Fahrtrichtung (1) der Sämaschine verlaufenden Teilungsebenen (20) gefertigt ist und beide halbschalenförmigen Rohrteile (17', 17") mittels Verbindungselementen (21) zusammengefügt sind.

4. Saatgutführungskanal nach Anspruch 3, **dadurch gekennzeichnet, dass** der Schlitz (24) sich zumindest den halbschalenähnlichen Rohrteilen (17',17") befindet.

5. Saatgutführungskanal nach Anspruch 1, **dadurch gekennzeichnet, dass** in einem geringen Abstand vor der Ausmündung (19) in den Saatgutführungskanal (17) eine Materialzuführungsleitung (29) unter einem flachen Winkel einmündet.

6. Saatgutführungskanal nach Anspruch 5, **dadurch gekennzeichnet, dass** der Winkel kleiner als 20° ist.

7. Saatgutführungskanal nach einem oder mehreren der vorstehenden Ansprüche, **dadurch gekennzeichnet, dass** der Schlitz (24) mittig angeordnet ist.

8. Saatgutführungskanal nach einem oder mehreren der vorstehenden Ansprüche, **dadurch gekennzeichnet, dass** der Schlitz (24) in seiner Breite einstellbar ausgebildet ist.

9. Saatgutführungskanal nach einem oder mehreren der vorstehenden Ansprüche, **dadurch gekennzeichnet, dass** die halbschalenähnlichen Rohrteile (17', 17") zur Einstellung der Breite des Schlitzes (24) zueinander mittels geeigneter Mittel ein- und/oder verstellbar sind.

10. Saatgutführungskanal nach einem oder mehreren der vorstehenden Ansprüche, **dadurch gekennzeichnet, dass** der Querschnitt des Saatgutführungskanals (17) zumindest annähernd rund oder oval ist.

## Claims

1. Pneumatically pressurized seed guiding channel (17) of a coulter (5) of a seed drill, in particular a precision air planter, which, in the region of the coulter (5), has a curvature in the opposite direction to the direction of travel (1) and an orifice opening (19) pointing in the opposite direction to the direction of travel (1), wherein, in the region of the coulter (5) on the outer side (22) of the curvature thereof, the seed guiding channel (17) has at least one air outlet opening in its wall (23), **characterized in that** the air outlet opening located in the wall (23) on the outer side (22) of the curvature is formed in the region of the coulter (5) as a continuous slit (24), extending in the radial and/or circumferential direction, in the outer wall (23) of the curvature and extends from the orifice (19) in the opposite direction to the conveying direction (25) over at least half the length of the curvature of the seed guiding channel (17) and forms a groove-like seed guiding track on the inner side (26) of the outer wall (23) of the curvature of the seed guiding channel (17), and **in that** the inner lateral surfaces (27) of the seed guiding channel (17) are arranged so as to converge in the shape of a V or funnel in the direction of the slit (24) on the outer side (22) of the curvature.

2. Seed guiding channel according to Claim 1, **characterized in that** the seed guiding channel (17) has a continuous slit (24) over at least approximately the entire curvature region, which slit forms the groove-like seed guiding track and the air outlet opening, and **in that** a pneumatic seed supply line is connected to the seed guiding channel (17).

3. Seed guiding channel according to one or both of the preceding claims, **characterized in that** the seed guiding channel (17) consists of plastic and is manufactured from two half-shell-like pipe parts (17', 17") having a parting plane (20) running in the direction of travel (1) of the seed drill and the two half-shell-shaped pipe parts (17', 17") are joined together by means of connecting elements (21).

4. Seed guiding channel according to Claim 3, **characterized in that** the slit (24) is located between the half-shell-like pipe parts (17', 17").

5. Seed guiding channel according to Claim 1, **characterized in that** a material supply line (29) opens at a shallow angle into the seed guiding channel (17) a short distance upstream of the orifice (19).

6. Seed guiding channel according to Claim 5, **characterized in that** the angle is less than 20°.

7. Seed guiding channel according to one or more of the preceding claims, **characterized in that** the slit (24) is arranged centrally.

8. Seed guiding channel according to one or more of the preceding claims, **characterized in that** the width of the slit (24) is designed to be set.

9. Seed guiding channel according to one or more of the preceding claims, **characterized in that**, in order to set the width of the slit (24), the half-shell-like pipe parts (17', 17") can be set and/or adjusted with respect to one another by means of suitable means.

10. Seed guiding channel according to one or more of the preceding claims, **characterized in that** the cross section of the seed guiding channel (17) is at least approximately round or oval.

## Revendications

1. Canal de guidage pneumatique de semences (17) du soc (5) d'un semoir, notamment d'un semoir de précision,
ayant au niveau du soc de semoir (5), un coude dirigé dans le sens opposé de la direction de déplacement (1), et un orifice débouchant (19) tourné dans le sens opposé de la direction de déplacement (1),
le canal de guidage de semences (17) ayant, dans la zone du soc (5), sur son côté extérieur du coude (22), au moins un orifice de sortie d'air réalisé dans sa paroi (23),
**caractérisé en ce que**
l'orifice de sortie d'air de la paroi (23) du côté extérieur (22) du coude, se trouve au niveau du soc de semoir (5) sous la forme d'une fente (24) dirigée radialement et/ou s'étendant de façon continue dans la direction périphérique dans la paroi extérieure (23) du coude, et cette fente s'étend à partir de l'embouchure (19) dans le sens opposé de la direction de passage (25) sur au moins la moitié de la longueur du coude du canal de guidage de semences (17), et constitue un chemin de guidage de semences en forme de rainure dans la face intérieure (26) de la paroi extérieure (23) du coude du canal de guidage de semences (17),
les surfaces latérales intérieures (27) du canal de guidage de semences (17) se rejoignant en direction de la fente (24) sur le côté extérieur (22) du coude, en forme de V et/ou en forme d'entonnoir.

2. Canal de guidage de semences selon la revendication 1,
**caractérisé en ce que**
sur au moins pratiquement toute la zone du coude, le canal (17) comporte une fente continue (24) constituant le chemin de guidage de semences en forme de rainure et l'orifice de sortie d'air,
une conduite d'alimentation pneumatique de semences étant reliée au canal de guidage de semences (17).

3. Canal de guidage de semences selon l'une ou plusieurs des revendications précédentes,
**caractérisé en ce que**
le canal de guidage de semences (17) est en matière plastique et se compose de deux parties tubulaires (17', 17") en forme de demi-coquilles, avec un plan de jonction (20) situé dans la direction de déplacement (1) du semoir, et les deux parties tubulaires en forme de demi-coquilles (17', 17") étant assemblées par des éléments de liaison (21).

4. Canal de guidage de semences selon la revendication 3,
**caractérisé en ce que**
la fente (24) se trouve au moins dans les parties tubulaires (17', 17") analogues à des demi-coquilles.

5. Canal de guidage de semences selon la revendication 1,
**caractérisé en ce qu'**
à une faible distance, en amont de l'orifice de sortie (19), le canal de guidage de semences (17) comporte une conduite d'alimentation en produits (29) débouchant suivant un angle aigu.

6. Canal de guidage de semences selon la revendication 5,
**caractérisé en ce que**
l'angle aigu est inférieur à 20°.

7. Canal de guidage de semences selon une ou plusieurs des revendications précédentes,
**caractérisé en ce que**
la fente (24) est prévue au milieu.

8. Canal de guidage de semences selon une ou plusieurs des revendications précédentes,
**caractérisé en ce que**
la fente (24) est de largeur réglable.

9. Canal de guidage de semences selon une ou plusieurs des revendications précédentes,
**caractérisé en ce que**
les parties tubulaires (17', 17") analogues à des demi-coquilles, sont réglables et, et/ ou déplaçables pour régler la largeur de la fente (24), l'une par rapport à l'autre à l'aide de moyens appropriés.

10. Canal de guidage de semences selon une ou plusieurs des revendications précédentes,
**caractérisé en ce que**
la section du canal de guidage de semences (17), est au moins sensiblement circulaire ou ovale.
